# EUROPÄISCHE PATENTSCHRIFT

(11) **EP 3 172 537 B1**
(45) Veröffentlichungstag und Bekanntmachung des Hinweises auf die Patenterteilung: **17.11.2021**
(21) Anmeldenummer: 15738357.1
(22) Anmeldetag: 16.07.2015
(51) Int. Cl.: G01F 1/58

(54) **MAGNETISCH-INDUKTIVES DURCHFLUSSMESSGERÄT**
MAGNETIC INDUCTIVE FLOWMETER
DÉBITMÈTRE MAGNÉTO-INDUCTIF

(30) Priorität: 25.07.2014 DE 202014103426 U
(43) Veröffentlichungstag der Anmeldung: 31.05.2017
(73) Patentinhaber: Endress+Hauser Flowtec AG, 4153 Reinach (CH)
(72) Erfinder: VOIGT, Frank, 79576 Weil am Rhein (DE); BÄHR, Günther, CH-4106 Therwil (CH); KÜNG, Thomas, CH-4052 Basel (CH)
(74) Vertreter: Andres, Angelika Maria
(86) Internationale Anmeldenummer: PCT/EP2015/066257
(87) Internationale Veröffentlichungsnummer: WO 2016/012337

(56) Entgegenhaltungen:
- WO-A1-2004/072590
- DE-A1- 3 908 698
- DE-A1-102004 014 295
- DE-A1-102010 001 393

## Beschreibung

Die vorliegende Erfindung betrifft ein magnetisch-induktives Durchflussmessgerät nach dem Oberbegriff des Anspruchs 1.

Magnetisch-induktive Durchflussmessgeräte nutzen für die volumetrische Strömungsmessung das Prinzip der elektrodynamischen Induktion aus und sind aus einer Vielzahl von Veröffentlichungen bekannt. Senkrecht zu einem Magnetfeld bewegte Ladungsträger des Mediums induzieren eine Messspannung in im Wesentlichen senkrecht zur Durchflussrichtung des Mediums und senkrecht zur Richtung des Magnetfeldes angeordneten Messelektroden. Die in die Messelektroden induzierte Messspannung ist proportional zu der über den Querschnitt des Messrohres gemittelten Strömungsgeschwindigkeit des Mediums, also proportional zum Volumenstrom. Ist die Dichte des Mediums bekannt, lässt sich der Massestrom in der Rohrleitung bzw. in dem Messrohr bestimmen. Die Messspannung wird üblicherweise über ein Messelektrodenpaar abgegriffen, das bezüglich der Koordinate entlang der Messrohrachse in dem Bereich maximaler Magnetfeldstärke angeordnet ist und wo folglich die maximale Messspannung zu erwarten ist.

Die WO 2004/072590 A1 offenbart ein magnetisch-induktives Durchflussmessgerät mit zwei an einem Messrohr gegenüberliegend angeordneten Spulenkörpern mit jeweils einer Spule und einem Polschuh als Spulenkern. Der Polschuh ist in einer ersten Öffnung des Spulenkörpers längs der Spulenachse geführt. Er weist eine Ausformung auf, die so ausgestaltet ist, dass das Messrohr vom Polschuh näherungsweise spaltfrei kontaktierbar ist. Die Spulenkörper werden mittels zweier Feldrückführ-Elemente gegenseitig vorgespannt. Dadurch wird der jeweilige Polschuh auf das Messrohr angedrückt.

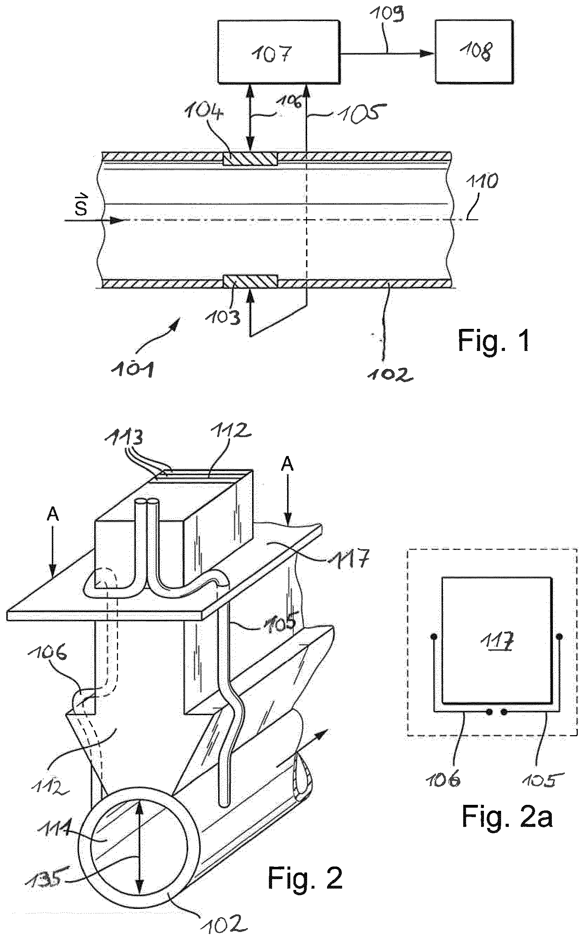

Die DE 10 2004 014 300 A1 beschreibt ein magnetisch-induktives Durchflussmessgerät, welches im Detail in Fig. 1 und 2 näher vorgestellt wird.

Ein gattungsgemäßes Durchflussmessgerät wird zudem in der DE 10 2010 001 393 A1 offenbart. Dieses Durchflussmessgerät ist in Fig. 3 und 4 näher dargestellt. Dieses Durchflussmessgerät zeichnet sich insbesondere durch seine schnelle, kostengünstige und unkomplizierte Herstellbarkeit aus.

Die Aufgabe der Erfindung besteht ausgehend darin, einen Messfehler durch geschickte Kabelführung zu verringern.

Die Aufgabe wird gelöst durch den Gegenstand des Anspruchs 1.

Erfindungsgemäß weist ein magnetisch-induktives Durchflussmessgerät zur Ermittlung des Durchflusses eines Messmediums durch ein Messrohr mit einer Messrohrachse zumindest eine erste Spulenbaugruppe auf mit einem Spulenkörper zur Aufnahme eines Spulenkerns einer Spule, wobei die Spule auf den Spulenkörper gewickelt ist und wobei der Spulenkern in einer ersten Öffnung des Spulenkörpers mit einer Längsachse des Spulenkerns koaxial zur Spule angeordnet ist.

Bei dem erfindungsgemäßen magnetisch-induktiven Durchflussmessgerät sind zwischen dem Spulenkern und dem Spulenkörper zumindest zwei Kabelstränge angeordnet, wobei die Kabelstränge dem Signalabgriff an zwei oder mehr am Messrohr angeordneten Messelektroden dienen.

Die Kabelstränge verlaufen innerhalb der Spulenbaugruppe entlang einer Schnittebene, welche senkrecht zur Messrohrachse verläuft. Kabelstränge besitzen oftmals eine gewisse Eigensteifigkeit. Daher können sie etwas aus der Ebene hervorstehen. Das Hervorstehen aus der Ebene sollte jedoch nicht mehr als das Zweifache des Kabeldurchmessers betragen.

Durch die Führung der Kabel im Wesentlichen parallel zum Magnetfeld kann die Messperformance des Durchflussmessgerätes verbessert werden.

Der Spulenkern weist zumindest zwei Aussparungen auf, wobei eine jede dieser Aussparungen zur Führung jeweils eines der Kabelstränge vorgesehen ist.

Vorteilhafte Ausgestaltungen der Erfindung sind Gegenstand der Unteransprüche. Die Aussparungen sind besonders vorteilhaft endständig im Spulenkern angeordnet. Durch das Vorsehen von Aussparungen ist eine zuverlässige Kabelführung möglich.

Es ist von Vorteil, wenn die Aussparungen und der Spulenkern gegenüber dem Spulenkörper derart angeordnet sind, dass die Kabelführung der zwei Kabelstränge zumindest im Bereich der Spulenbaugruppe symmetrisch erfolgt.

Die Kabelstränge sind vorteilhaft bereichsweise parallel zu einer Längsachse B des Spulenkerns in der Spulenbaugruppe geführt.

Der Spulenkern ist in einer vorteilhaften Ausgestaltung ein einziges Bauteil aus miteinander verbundenen Kernblechen. Die Aussparung wird dabei durch zwei Kernbleche begrenzt.

Es ist von Vorteil wenn einer, insbesondere beide, der zwei Kabelstränge derart geführt ist, dass er im Wesentlichen zwei Biegungen von mehr als 30°, insbesondere mehr als 60°, und eine dritte Biegung von mehr als 15 °, insbesondere mehr als 30°, in der Schnittebene aufweist.

Besonders von Vorteil ist es, wenn der Spulenkörper eine Ausformung aufweist und wobei der Spulenkörper einen ersten Anschlag aufweist, welcher zwischen Messrohr und Spule angeordnet ist, wobei die Ausformung des Spulenkerns im montierten Zustand der ersten Spulenbaugruppe am ersten Anschlag des Spulenkörpers anliegt und eine Verschiebung des Spulenkerns relativ zum Spulenkörper längs der Längsachse des Spulenkerns in eine vom Messrohr abgewandte erste Richtung unterbindet, wobei der Spulenkörper einen zweiten Anschlag auf einer dem Messrohr abgewandten Seite des Spulenkörpers aufweist, wobei der Spulenkern mit einem Befestigungselement, welches im montierten Zustand am zweiten Anschlag des Spulenkörpers anliegt, unter einer Vorspannung längs der Längsachse des Spulenkerns zwischen dem ersten Anschlag und dem zweiten Anschlag des Spulenkörpers am Spulenkörper befestigt ist.

Es ist besonders von Vorteil, wenn der Spulenkern als Polschuh ausgeformt ist.

Es ist zudem von Vorteil, wenn der Spulenkern eine Nut aufweist und dass das Befestigungselement zumindest einen zur Nut des Spulenkerns passenden Spund aufweist, wobei Spulenkern und Befestigungselement über eine formschlüssige Verbindung von Nut und Spund miteinander verbunden sind.

In einer weiteren vorteilhaften Ausführungsvariante ist der Spulenkörper zumindest einen dritten Anschlag, wobei das Befestigungselement im montierten Zustand am dritten Anschlag anliegt, wodurch eine Verschiebung des Befestigungselements in eine zweite Richtung, senkrecht zur ersten Richtung unterbunden ist und wodurch eine Verschiebung des Befestigungselements in eine dritte Richtung, senkrecht zur ersten und zur zweiten Richtung unterbunden ist.

Es ist zudem von Vorteil, wenn zwischen Spulenkern und Messrohr mindestens ein Polschuhblech angeordnet ist.

Dabei kann jedes Polschuhblech in vorteilhafter Weise separat in ein dafür vorgesehenes Formnest im Spulenkörper im montierten Zustand des Spulenkörpers eingeklickt sein.

Die erste Spulenbaugruppe und eine zweite Spulenbaugruppe sind vorteilhaft gegenüberliegend am Messrohr angeordnet, wobei die Spulen so angeschlossen werden, dass das von ihnen erzeugte Magnetfeld in eine gemeinsame Richtung weist.

Die erste Spulenbaugruppe und die zweite Spulenbaugruppe sind insbesondere formschlüssig unter einer Vorspannung koaxial zur Längsachse des Spulenkerns miteinander verbunden.

Es ist von Vorteil, wenn die erste Spulenbaugruppe und die zweite Spulenbaugruppe im Wesentlichen komplementär aufgebaut sind.

In einer vorteilhaften Ausführungsvariante weist der Spulenkörper zumindest eine Kabelführung zur Führung eines Kabels auf, so dass das geführte Kabel einer vorgegebenen Länge einen vorgegebenen Abstand zum Spulenkörper nicht überschreitet.

Weiterbildungen und Ausgestaltungen der Erfindungen finden sich in den Merkmalen der abhängigen Ansprüche wieder.

Die Erfindung lässt zahlreiche Ausführungsformen zu. Einige davon sollen hier kurz anhand der nachfolgenden Figuren näher erläutert werden. Gleiche Elemente sind in den Figuren mit gleichen Bezugszeichen versehen.
Fig. 1 zeigt eine erste Spulenanordnung eines magnetisch-induktiven Durchflussmessgerätes aus dem Stand der Technik;
Fig. 2: eine perspektivische Darstellung einer aus dem Stand der Technik bekannten Führung der Signalleitungen zwischen den Messelektroden und dem Umformer bei einem magnetisch-induktiven Durchflussmessgerät,
Fig. 2 a: einen Draufsicht auf den Polschuh gemäß der Kennzeichnung A in Fig. 2,

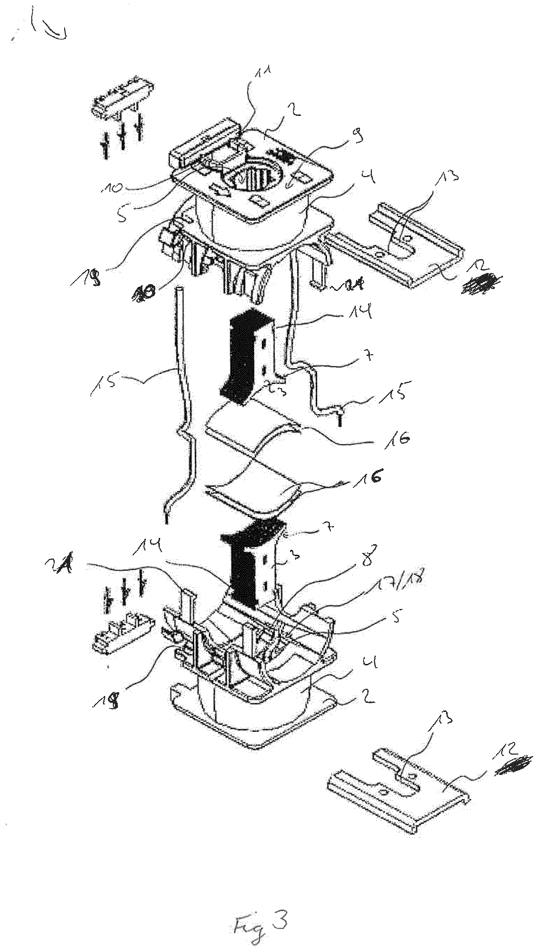

Fig. 3 zeigt zwei identische Spulenanordnungen eines magnetisch-induktiven Durchflussmessgerätes aus dem Stand der Technik in einer Explosionsdarstellung;

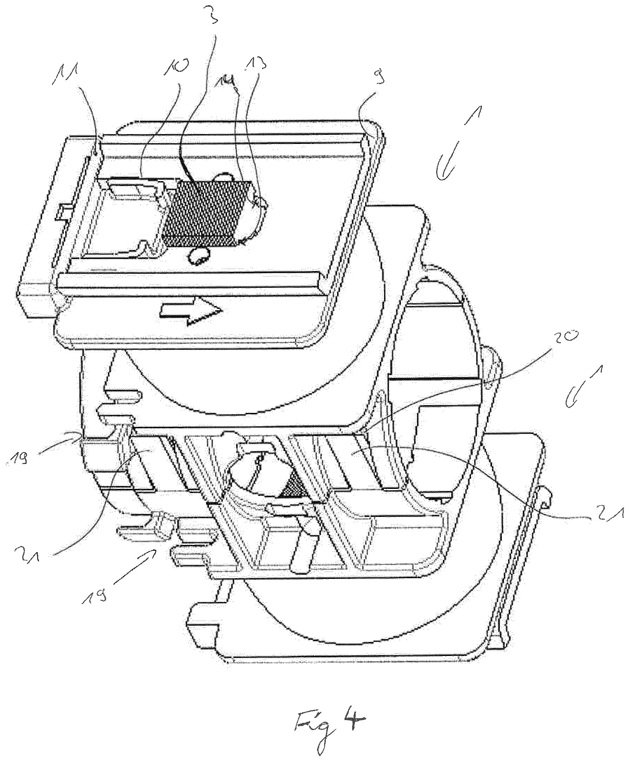

Fig. 4 zeigt perspektivisch die zwei identischen Spulenanordnungen der Fig. 2 im montierten Zustand;

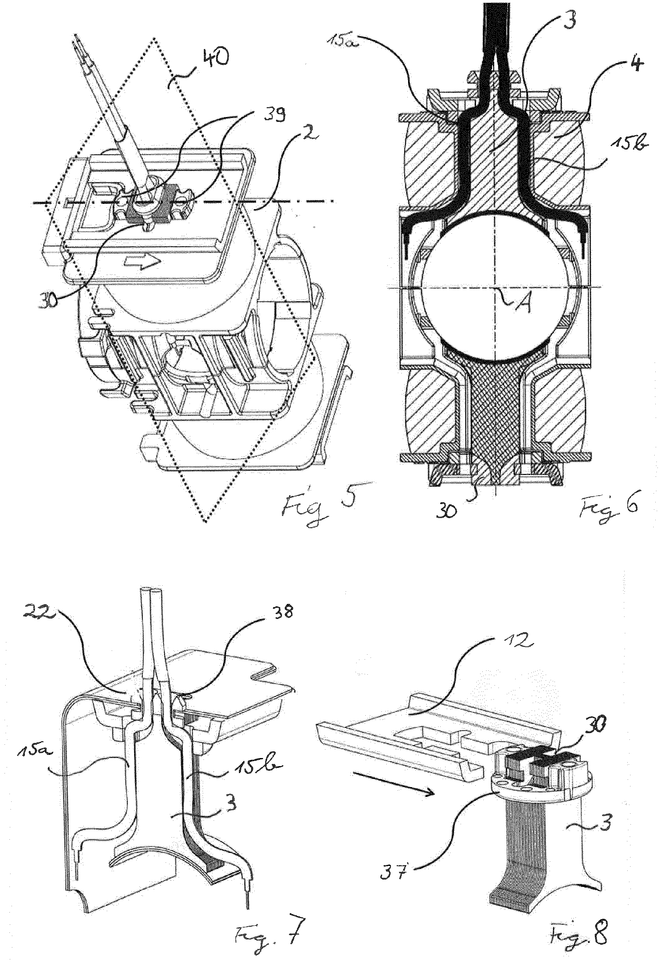

Fig. 5 zeigt perspektivisch Spulenanordnungen eines erfindungsgemäßen magnetisch-induktiven Durchflussmessgerätes;
Fig. 6 zeigt eine Schnittansicht des erfindungsgemäßen Durchflussmessgerätes;
Fig. 7 zeigt eine perspektivische Schnittansicht der Kabelführung im erfindungsgemäßen Durchflussmessgerät; und
Fig. 8 zeigt die Halterung des Spulenkerns im erfindungsgemäßen Durchflussmessgerät.

Fig. 1 zeigt eine schematische Darstellung eines magnetisch-induktiven Durchflussmessgeräts 101, wie es aus dem Stand der Technik bekannt ist. Das Messrohr 102 des in der Zeichnung nicht gesondert dargestellten Durchfluss-messgeräts wird von einem gleichfalls nicht gesondert darstellten Messmedium in Richtung der Messrohrachse 110 durchströmt. Das Messmedium ist zumindest in geringem Umfang elektrisch leitfähig. Das Messrohr 102 selbst ist aus einem nicht leitfähigen Material gefertigt, oder es ist zumindest an seiner Innenseite mit einem nicht leitfähigen Material ausgekleidet.

Infolge eines senkrecht zur Flussrichtung des Messmediums ausgerichteten Magnetfeldes, das üblicherweise von zwei diametral angeordneten Elektromagneten erzeugt wird, die in der Zeichnung ebenfalls nicht zu sehen sind, wandern in dem Messmedium befindliche Ladungsträger zu der entgegengesetzt gepolten Messelektrode 103; 104 ab. Die sich zwischen den beiden Messelektroden 103, 104 aufbauende Spannung ist proportional zu der über den Querschnitt des Messrohrs 102 gemittelten Strömungsgeschwindigkeit des Messmediums, d. h. sie ist ein Maß für den Volumenstrom des Messmediums im Messrohr 102. Das Messrohr 102 ist übrigens über Verbindungselemente, die in der Zeichnung gleichfalls nicht gesondert dargestellt sind, mit einer Rohrleitung, durch die das Messmedium hindurchströmt, verbunden.

Über die Signalleitungen 105, 106 sind die Messelektroden 103, 104 mit der Regel-/Auswerteeinheit 107 verbunden. Über die Verbindungsleitung 109 können des Weiteren Messdaten zu der Anzeigeeinheit 108 weitergeleitet werden.

In den Figuren Fig. 2 und Fig. 2a ist die Führung der Elektrodenkabel zwischen den Messelektroden 103, 104 und dem Umformer, der zumindest die Regel-Auswerteeinheit 107 enthält, dargestellt. Die von den Messelektroden 103, 104 wegführenden Elektrodenkabel 105, 106 verlaufen an gegenüberliegenden Seitenflächen eines Spulenkerns mit integriertem Polschuh 112. Der gegenüberliegende Spulenkern mit integriertem Polschuh der Magnetanordnung ist in Fig. 2 nicht gesondert wiedergegeben. Der Spulenkern 112 besteht bevorzugt aus einer Vielzahl von zusammengesetzten und miteinander festverbundenen Kernblechen 113. Durch den schichtweisen Aufbau des Spulenkerns 112 werden Wirbelströme unterdrückt.

Im Bereich der virtuellen Fläche 117 zeigen die Elektrodenkabel 105, 106 einen geänderten Richtungsverlauf. Gut sichtbar ist dies in der Fig. 2a, die eine Draufsicht auf die virtuelle Fläche 117 zeigt. Die zwischen den beiden Elektrodenkabeln 105, 106 in diesem Bereich aufgespannte Fläche ist senkrecht zu dem Magnetfeld ausgerichtet, das von der Magnetanordnung erzeugt wird. In diesem Bereich ist die Gefahr, dass Störströme in die Elektrodenkabel 105, 106 induziert werden, besonders groß.

Wie in Fig. 1 und 2 erkennbar, erfolgt die Kabelführung der Signalleitungen 105 und 106 in dem dargestellten Durchflussmessgerät, seitlich am Spulenkern 112 vorbei. Dabei werden die Signalleitungen aus einer Ebene senkrecht zum Messrohr 102 herausgeführt, so dass sie den Spulenkern 112 umgreifen.

In Fig. 3 sind zwei baugleiche Spulenbaugruppen 1 eines magnetisch-induktiven Durchflussmessgeräts nach dem Stand der Technik dargestellt. Verwendet wird ein solches Durchflussmessgerät z.B. in der Prozessmesstechnik zur Ermittlung des Durchflusses eines Messmediums durch ein hier nicht gezeichnetes Messrohr. Jede Spulenbaugruppe 1 weist jeweils einen Spulenkörper 2 zur Aufnahme eines Spulenkerns 3 einer Spule 4 auf, wobei die Spule 4 auf den Spulenkörper 2 gewickelt ist. Der Spulenkern 3 ist in einer ersten Öffnung 5 des Spulenkörpers 2 koaxial zur Spule 4 angeordnet. Er ist entlang seiner Längsachse in der Öffnung zumindest in einer Richtung, im betriebsfertigen Zustand im Wesentlichen senkrecht zu einer Messrohrlängsachse, verschiebbar geführt.

In Fig. 3 weist der Spulenkörper 2 zumindest eine erste Ausformung 7 auf. In diesem Beispiel ist der Spulenkern 3 mit integriertem Polschuh ausgeformt. Ein Polschuh dient zur Feldführung und ist entsprechend ausgeformt. Der Spulenkern 3 übernimmt hier also die Funktion eines Spulenkerns und eines Polschuhs, insbesondere der Feldlinienführung im Messrohr. Dieses Bauteil könnte hier alternativ auch insgesamt als Polschuh bezeichnet werden. Die Ausformung 7 weist hier die Form eines Rohrabschnitts auf. Somit kann ein Messrohr flächig kontaktiert werden. Die Krümmung und die Größe sind abgestimmt mit dem Messrohr für eine gute Passform. Die Ausformung 7 weist in diesem Fall einen größeren Querschnitt quer zur Längsachse des Spulenkerns 3 auf, als die Öffnung 5 im Spulenkörper 2. Daher passt die Ausformung 7 nicht durch die Öffnung 5 des Spulenkörpers 2. Der Spulenkörper 2 weist einen ersten Anschlag 8, insbesondere auf einer dem Messrohr 4 zugewandten Seite der Spule 4, auf. Der Anschlag 8 ist also in diesem Beispiel zwischen Messrohr 6 und Spule 4 am Spulenkörper 2 angeordnet. Die Ausformung 7 und der Anschlag 8 sind dabei so ausgeformt, dass die Ausformung 7 des Spulenkerns 3 bzw. der Polschuh im montierten Zustand der ersten Spulenbaugruppe 1 am ersten Anschlag 8 des Spulenkörpers 2 anliegt. Eine Verschiebung des Spulenkerns 3 relativ zum Spulenkörper 2 längs der Längsachse des Spulenkerns 3 in eine vom Messrohr 6 abgewandte erste Richtung ist damit unterbunden. Der Anschlag 8 weist insbesondere im Wesentlichen die Form der Ausformung 7 auf, so dass diese großflächig am Anschlag 8 anliegt. Dafür könnte ein eigenes Formnest im Spulenkörper 3 vorgesehen sein.

In an sich bekannter Weise weist der Spulenkörper 2 einen zweiten Anschlag 9 auf einer dem Messrohr 6 abgewandten Seite des Spulenkörpers 2 und damit auch der Spule 4 auf. An diesen zweiten Anschlag 9 ist ein Befestigungselement 12 anliegend. Das Befestigungselement 12 wird dabei mit dem Spulenkern 3 form- und/oder kraftschlüssig so verbunden, dass der Spulenkern 3 unter einer Axialspannung, also einer längs der Längsachse des Spulenkerns 3 wirkenden Spannung, am Spulenkörper 2 befestigt ist. Der Spulenkern 3 wird somit mit einem Befestigungselement 12, welches im montierten Zustand am zweiten Anschlag 9 des Spulenkörpers 2 anliegt, unter einer Vorspannung zumindest im Bereich der Spule 4 am Spulenkörper 2 befestigt. Die Spannung wirkt also zumindest im Bereich der Spule 4, insbesondere zwischen dem ersten Anschlag 8 und dem zweiten Anschlag 9 des Spulenkörpers 2. Der erste Anschlag 8 liegt hier außerhalb der Öffnung 5 des Spulenkörpers 2, bzw. begrenzt diese. Da hier der Spulenkern als Polschuh ausgeformt ist, ist die Ausformung 7 an einem im montierten Zustand dem Messrohr zugewandten, erstes Ende des Spulenkerns 3 lokalisiert. Vereinfacht könnte sie als T- oder Y-förmig bezeichnet werden. Durch die so beschriebene Lagerung ist der Spulenkern 3 im Spulenkörper 2 definiert positioniert. Die Führung in der Öffnung 5 verhindert allzu große Verschiebungen senkrecht zur Längsachse des Spulenkerns 3. Die Vorspannung zwischen beiden Anschlägen 8 und 9 verhindert eine Verschiebung längs der Längsachse zum Spulenkörper 2.

Die Vorspannung und die Befestigung mittels des Befestigungselements 12 wird beispielsweise dadurch erreicht, dass der Spulenkern 3 eine Nut 14 aufweist und dass das Befestigungselement 12 zumindest einen zur Nut 14 bzw. in die Nut 14 des Spulenkerns 3 passenden Spund 13 aufweist, wobei Spulenkern 3 und Befestigungselement 12 über eine formschlüssige Verbindung von Nut 14 und Spund 13 miteinander verbunden sind. Das Befestigungselement 12 kann dabei als Blech mit entsprechenden Aussparungen, wie skizziert, ausgestaltet sein. Somit wird auch durch die Elastizität des Befestigungselements 12 und der Ausformung 7 des Spulenkerns 3 die Vorspannung im Spulenkern 3 ermöglicht. Die Nut 14 ist insbesondere an seinem ersten Ende gegenüberliegenden, zweiten Ende des Spulenkerns 3 angeordnet.

Wird das dargestellte Befestigungselement 12 mit seinen Spunden 13 in die Nuten 14 des Spulenkerns 3 eingeschoben, liegt es, wenn der Spulenkern 3 ist die Öffnung des Spulenkörpers 2 eingeführt ist, am zweiten Anschlag 9 des Spulenkörpers 3 auf. Um es gegen eine Verschiebung in beide andere Raumrichtungen senkrecht zur Längsachse des Spulenkerns 3 gegen eine Verschiebung zu sichern, weist der Spulenkörper 2 einen dritten Anschlag 10 und einen vierten Anschlag 11 auf, wobei das Befestigungselement 12 im montierten Zustand am dritten und am vierten Anschlag 10 und 11 anliegt, wodurch dann eine Verschiebung des Befestigungselements 12 in eine zweite Richtung, senkrecht zur ersten Richtung und wodurch eine Verschiebung des Befestigungselements 12 in eine dritte Richtung, senkrecht zur ersten und zur zweiten Richtung unterbunden ist. In diesem Ausführungsbeispiel werden somit zwei Anschläge 10 und 11 zur Lagedefinition des Befestigungselements 12 genutzt. Bei einer Konischen Aussparung im Befestigungselement und einem entsprechend geformten Anschlag auf dem Spulenkörper wäre nur ein Anschlag ausreichend, um eine Verschiebung des Befestigungselements in eine zweite Richtung, senkrecht zur ersten Richtung und eine Verschiebung des Befestigungselements in eine dritte Richtung, senkrecht zur ersten und zur zweiten Richtung zu unterbinden.

Weiterhin offenbart sind zwei Polschuhbleche 16, welche im montierten Zustand des magnetisch-induktiven Durchflussmessgeräts zwischen Spulenkern 3 und Messrohr 6 näherungsweise luftspaltfrei angeordnet sind. Alternativ ist auch nur die Montage eines Polschuhblechs möglich. Auch die Verwendung dreier oder mehrere Polschuhbleche soll hier nicht ausgeschlossen werden. Die Funktion der Polschuhbleche 16 ist die Magnetfeldführung im Messrohr. Daher sind die Polschuhbleche 16 und der Spulenkern 3 bzw. der Polschuh so zu dimensionieren, dass die Berührungsfläche der beiden Bauteile sehr groß und möglichst spaltfrei ist. Natürlich ist der Spulenkörper 2 entsprechend auszulegen, insbesondere dann wenn jedes Polschuhblech 16 separat in ein dafür vorgesehenes Formnest 17, 18 im Spulenkörper 2 eingeklickt ist. Jedes Polschuhblech 16 ist in einem eigenen Formnest 17, 18 am Spulenkörper befestigt, z.B. durch Einklicken. Davon unberührt sollten die Berührungsflächen der Polschuhbleche 16 mit dem Spulenkern 3 bzw. dem Polschuh und dem Messrohr möglichst groß und Spaltfrei sein.

Zum magnetisch-induktiven Durchflussmessgerät werden zwei Spulenbaugruppen 1 auf gegenüberliegenden Seiten eines Messrohrs angeordnet. Dabei werden die Spulen 4 so angeschlossen werden, dass das von ihnen erzeugte Magnetfeld in eine gemeinsame Richtung weist, insbesondere weisen die Feldlinien des erzeugten Magnetfelds in die erste Richtung längs der Längsachsen der koaxialen Spulenkerne 3. Da es sich hier um zwei technisch identische Spulenbaugruppen 1 mit jeweils gleichen Komponenten und Bauteilen und zueinander komplementären Schnittstellen handelt, welche somit gleiche Funktionen erfüllen, und da eben auch die Spulen 4 der beiden Spulenbaugruppen 1 gleich aufgebaut sind müssen die Spulen 4 entsprechend angeschlossen werden. Sie liegen im Wesentlichen in näherungsweise zwei parallelen Ebenen um 180° zueinander verdreht. Die Spulenbaugruppen 1 sind konstruktiv so ausgestaltet, dass sie nur in einer vorbestimmten Art und Weise montierbar sind, was unter dem Begriff Poka-Yoke subsumiert wird.

Die erste Spulenbaugruppe 1 und die zweite Spulenbaugruppe 1 sind insbesondere formschlüssig miteinander verbunden. Rasthaken 21 greifen in dafür vorgesehene und ausgelegte bzw. dimensionierte Öse 20 des jeweiligen Verbindungspartners, also der jeweils anderen Spulenbaugruppe, ein. Dies kann unter einer geringen Vorspannung koaxial zur Längsachse des Spulenkerns 3 geschehen, womit die Spulenkörper kraftschlüssig mit dem Messrohr verbunden wären. Da die Spulenkörper aber beispielsweise aus Kunststoff gefertigt sind, könnte es jedoch durch Fließprozesse im Kunststoff nach einer bestimmten Zeit zum Verlust dieser Vorspannung kommen. Alternativ werden Feldrückführbleche an den Spulenkörpern 1 angebracht, welche die Spulenkörper 1 auf das Messrohr drücken und mit diesem kraftschlüssig verbinden. Die Spulenkörper sind in beiden Fällen so ausgestaltet, dass sie jeweils quasi luftspaltfrei das Messrohr kontaktieren. Gegen Verdrehen um eine und gegen Verschieben längs einer Längsachse des Messrohrs sind die montierten Spulenbaugruppen 1 mittels den in das Messrohr eingesetzten oder an das Messrohr angesetzten Elektroden der Elektrodenbaugruppen gesichert.

Jeder Spulenkörper 1 weist darüber hinaus in diesem Ausführungsbeispiel zumindest eine Kabelführung 19, hier in Form einer Einkerbung und eines Kabelhakens, zur Führung eines Kabels aufweist, so dass das geführte Kabel einer vorgegebenen Länge einen vorgegebenen maximalen Abstand zum Spulenkörper 2 nicht überschreitet. Diese Kabelführung 19 ist insbesondere zur Führung der Spulenkabel, welche in dieser Abbildung nicht gezeigt sind. Eine weitere Funktion der Kabelführung 19 ist das Sichern der Kabel gegen Abwickeln der Spule. Eine weitere Kabelführung kann in den Spulenkörpern 1 vorgesehen sein, um Kabel 15 eines Messumformers zu den Elektroden zu führen. Beispielsweise werden diese Kabel 15 in der Öffnung 5 geführt, insbesondere durch eine zusätzliche Aussparung in der Öffnung 5. Der Spulenkern weist im Bereich des Spulenkörpers 1 eine rechteckige Grundform auf, welche in einem Endabschnitt außerhalb des Spulenkörpers 1 in die Form des Polschuhs übergeht.

Die Kabelführung in Fig. 3 und 4 erfolgt wie in Fig. 1 und 2. Dabei wird ein Kabel 15 aus einer senkrechten Ebene zur Messrohrachse herausgeführt und um eine Seitenkante der im Beispiel rechteckigen Grundform des Spulenkerns herumgeführt.

Fig. 4 veranschaulicht die zwei montierten Spulenbaugruppen 1. In den beiden Spulenbaugruppen 1 befindet sich in betriebsfertigem Zustand des magnetisch-induktiven Messsystems das Messrohr, welches hier der Einfachheit halber nicht dargestellt ist. Sehr gut zu sehen ist die Kabelführung 19 in Form von jeweils einer Einkerbung und eines Kabelhakens. Auch hier wurde die Darstellung des zu führenden Kabels aus Gründen der Übersichtlichkeit weggelassen. Das Kabel würde einfach in die Kabelführung 19 eingeführt werden.

Ebenfalls gut zu sehen ist das montierte Befestigungselement 12, was am zweiten, dritten und vierten Anschlag 9, 10 und 11 anliegt. Dadurch ist es lediglich in Richtung des eingezeichneten Pfeils entfernbar. Die Spunde 13 sind in die Nuten 14 des Spulenkerns 3 eingeführt und bilden eine Spund-Nut-Verbindung. Die Rasthaken 21 der einen Spulenbaugruppe 1 sind in die Ösen 20 der anderen Spulenbaugruppe 1 eingerastet.

Fig. 5-7 zeigen ein erfindungsgemäßes Durchflussmessgerät. Der wesentliche Unterschied zu dem in Fig. 3 und 4 dargestellten Ausführungsbeispiel ist die geänderte Kabelführung.

Der Spulenkern 3 der Spulenanordnung 1 weist dabei, vorzugsweise in einem endständigen Bereich, zwei erste Aussparungen 30 auf, die in einer Schnittebene 40 durch den Spulenkern verläuft. Diese Schnittebene 40 verläuft senkrecht zur Messrohrachse A. Die Aussparung 30 wird seitlich jeweils durch Kernbleche begrenzt. Die Aussparung 30 ist, wie in Fig. 5 ersichtlich, an dem Ende des Spulenkerns eingebracht, welches nicht als Polschuh ausgeformt ist. Dieses Ende weist einen rechteckigen Querschnitt auf, wobei die Aussparungen U-förmig ausgestaltet sind und in zwei sich gegenüberliegende Seiten der Rechteckform eingebracht sind.

Die Kabelführung erfolgt von dem erfindungsgemäßen magnetisch-induktiven Durchflussmessgerät in der Schnittebene 40. Die Kabelstränge 15a und 15b werden in einem Einführungsbereich oberhalb des Spulenkerns in eine Führung eingeführt. Sodann werden die Kabelstränge in zwei unterschiedliche Richtungen aufgeteilt und zumindest bereichsweise seitlich am Spulenkern 3 vorbei und parallel zu einer Längsachse L vorbeigeführt. Schließlich werden die Kabelstränge 15a und 15b zu den Messelektroden hin geführt. Die Kabelführung der beiden Kabelstränge 15a und 15b wird durch die Form des Spulenkerns 3 und der Innenaussparung des Spulenkörpers 2 vorgegeben. Der Verlauf des so gebildeten Kanals für den ersten Kabelstrang 15a ist symmetrisch zu dem zweiten gebildeten Kanal für den zweiten Kabelstrang 15b.

Die in Fig. 5-7 dargestellte erfindungsgemäße Variante eines magnetisch-induktiven Durchflussmessgerätes kann derart zusammengebaut werden, dass die Kabelstränge 15a und 15b vor der Durchführung im Feldrückführblech 22 parallel zusammengeführt werden. Das oder die Feldführungsbleche 22 werden sodann mittels zweier Schrauben 39 in der Durchführung befestigt. Die Verbindungslinie 36 der beiden Schrauben 39 beträgt dabei vorzugsweise 90° zur Schnittebene 40. Zur Befestigung der Schrauben 39 ist ein Aufsteckelement 37 vorgesehen, welches in Fig. 8 ringförmig ausgestaltet ist. Dieses Aufsteckelement 37 wird bei der Montage endständig über den Spulenkern 3 geführt. In dem Aufsteckelement 37 kann ein Schraubengewinde angeordnet sein. Ein Befestigungselement 12 wird analog zu Fig. 3 und 4 seitlich auf den Spulenkern 3 aufgezogen und in zwei Ausformungen 7 ein, welche sich senkrecht zur Schnittebene 40 im Spulenkern 3 erstrecken. Oberhalb des Spulenkerns 3 ist eine Kabelführungsbuchse 38 vorgesehen, welche die Kabelstränge 15a und 15b voneinander beabstandet und zur Spulenanordnung hin leitet. Wie in den Fig. 5-7 erkennbar sind die Kabelstränge 15a und 15b bis zu ihrem Anschluss an den Messelektroden isoliert.

Insgesamt ist die Fläche senkrecht zum Magnetfeld bei der dargestellten Kabelführung sehr gering. Dadurch wird die Fläche minimiert, welche die Kabelstränge 15a und 15b um den Spulenkern 3 aufspannen. Zudem wird die Spannung, die in den Kabelsträngen induziert wird, minimiert. Dies wiederum ermöglicht eine Minimierung des Nullpunktsfehlers innerhalb der Messperiode. Schließlich kann durch die vorbeschriebene Kabelführung eine schnellere Abtastrate realisiert werden.

### Bezugszeichenliste

- 1: Spulenbaugruppe
- 2: Spulenkörper
- 3: Spulenkern mit Polschuh
- 4: Spule
- 5: Erste Öffnung im Spulenkörper
- 6: Messrohr
- 7: Ausformung des Polschuhs
- 8: Erster Anschlag des Spulenkörpers
- 9: Zweiter Anschlag des Spulenkörpers
- 10: Dritter Anschlag des Spulenkörpers
- 11: Vierter Anschlag des Spulenkörpers
- 12: Befestigungselement
- 13: Spund des Befestigungselements
- 14: Nut des Polschuhs
- 15: Signalkabel
- 15a: Kabelstrang
- 15b: Kabelstrang
- 16: Polschuhblech
- 17: Erstes Formnest für das Polschuhblech im Spulenkörper
- 18: Zweites Formnest für das Polschuhblech im Spulenkörper
- 19: Kabelführung
- 20: Öse
- 21: Rasthaken
- 22: Feldrückführblechen
- 23: Erste Stufe
- 24: Zweite Stufe
- 30: Aussparung
- 36: Verbindungslinie
- 37: Aufsteckelement
- 38: Kabelführungsbuchse
- 39: Schrauben
- 40: Schnittebene
- 101: magnetisch-induktives Durchflussmessgerät
- 102: Messrohr
- 103: Messelektrode
- 104: Messelektrode
- 105: Signalleitung
- 106: Signalleitung
- 107: Regel-/Auswerteeinheit
- 108: Anzeigeeinheit
- 109: Verbindungsleitung
- 110: Messrohrachse
- 112: Spulenkern
- 113: Kernbleche
- 117: virtuelle Fläche
- A: Messrohrachse
- B: Längsachse des Spulenkerns

## Patentansprüche

1. Magnetisch-induktives Durchflussmessgerät zur Ermittlung des Durchflusses eines Messmediums durch ein Messrohr (6) mit einer Messrohrachse (A), mit zumindest einer ersten Spulenbaugruppe (1) mit einem Spulenkörper (2) zur Aufnahme eines Spulenkerns (3) einer Spule (4), wobei die Spule (4) auf den Spulenkörper (2) gewickelt ist und wobei der Spulenkern (3) in einer ersten Öffnung (5) des Spulenkörpers (2) mit einer Längsachse des Spulenkerns (3) koaxial zur Spule (4) angeordnet ist, wobei zwischen dem Spulenkern (3) und dem Spulenkörper (2) zumindest zwei Kabelstränge (15a, 15b) angeordnet sind, wobei die Kabelstränge (15a, 15b) dem Signalabgriff an zwei oder mehr am Messrohr (6) angeordneten Messelektroden dienen,
wobei die Kabelstränge (15 a, 15 b) innerhalb der Spulenbaugruppe (1) entlang einer Schnittebene (40) verlaufen, weiche Schnittebene (40) senkrecht zur Messrohrachse (A) verläuft,
**dadurch gekennzeichnet, dass**
der Spulenkern (3) zumindest zwei Aussparungen (30) aufweist, wobei eine jede dieser Aussparungen (30) zur Führung jeweils eines der Kabelstränge (15a, 15b) vorgesehen ist.

2. Magnetisch-induktives Durchflussmessgerät nach Anspruch 1,
**dadurch gekennzeichnet, dass** die Aussparungen (30) und der Spulenkern (3) gegenüber dem Spulenkörper (2) derart angeordnet sind, dass die Kabelführung der zwei Kabelstränge (15a, 15b) zumindest im Bereich der Spulenbaugruppe (1) symmetrisch erfolgt.

3. Magnetisch-induktives Durchflussmessgerät nach einem der vorhergehenden Ansprüche, **dadurch gekennzeichnet, dass** die Kabelstränge (15a, 15b) bereichsweise parallel zu einer Längsachse B des Spulenkerns (3) in der Spulenbaugruppe (1) geführt sind.

4. Magnetisch-induktives Durchflussmessgerät nach einem der vorhergehenden Ansprüche, **dadurch gekennzeichnet, dass** der Spulenkern (3) ein einziges Bauteil aus miteinander verbundenen Kernblechen (13) ist, wobei die Aussparung (30) durch zwei Kernbleche begrenzt wird.

5. Magnetisch-induktives Durchflussmessgerät nach einem der vorhergehenden Ansprüche, **dadurch gekennzeichnet, dass** einer der zwei Kabelstränge (15a, 15b) derart geführt ist, dass er im Wesentlichen zwei Biegungen von mehr als 30°, insbesondere mehr als 60°, und eine dritte Biegung von mehr als 15 °, insbesondere mehr als 30°, in der Schnittebene (40) aufweist.

6. Magnetisch-induktives Durchflussmessgerät nach einem der vorhergehenden Ansprüche, **dadurch gekennzeichnet, dass** der Spulenkörper (2) eine Ausformung (7) aufweist und wobei der Spulenkörper (2) einen ersten Anschlag (8) aufweist, welcher zwischen Messrohr (6) und Spule (4) angeordnet ist, wobei die Ausformung (7) des Spulenkerns (3) im montierten Zustand der ersten Spulenbaugruppe (1) am ersten Anschlag (8) des Spulenkörpers (2) anliegt und eine Verschiebung des Spulenkerns (3) relativ zum Spulenkörper (2) längs der Längsachse des Spulenkerns (3) in eine vom Messrohr (6) abgewandte erste Richtung unterbindet, wobei der Spulenkörper (2) einen zweiten Anschlag (9) auf einer dem Messrohr (6) abgewandten Seite des Spulenkörpers (2) aufweist, wobei der Spulenkern (3) mit einem Befestigungselement (12), welches im montierten Zustand am zweiten Anschlag (9) des Spulenkörpers (2) anliegt, unter einer Vorspannung längs der Längsachse des Spulenkerns (3) zwischen dem ersten Anschlag (8) und dem zweiten Anschlag (9) des Spulenkörpers (2) am Spulenkörper (2) befestigt ist.

7. Magnetisch-induktives Durchflussmessgerät nach einem der vorhergehenden Ansprüche, **dadurch gekennzeichnet,**
**dass** der Spulenkern (3) als Polschuh ausgeformt ist.

8. Magnetisch-induktives Durchflussmessgerät nach einem der vorhergehenden Ansprüche, **dadurch gekennzeichnet,**
**dass** der Spulenkern (3) eine Nut (14) aufweist und dass das Befestigungselement (12) zumindest einen zur Nut (14) des Spulenkerns (3) passenden Spund (13) aufweist, wobei Spulenkern (3) und Befestigungselement (12) über eine formschlüssige Verbindung von Nut (14) und Spund (13) miteinander verbunden sind.

9. Magnetisch-induktives Durchflussmessgerät nach einem der vorhergehenden Ansprüche, **dadurch gekennzeichnet,**
**dass** der Spulenkörper (2) zumindest einen dritten Anschlag (10), wobei das Befestigungselement (12) im montierten Zustand am dritten Anschlag (10) anliegt, wodurch eine Verschiebung des Befestigungselements (12) in eine zweite Richtung, senkrecht zur ersten Richtung unterbunden ist und wodurch eine Verschiebung des Befestigungselements (12) in eine dritte Richtung, senkrecht zur ersten und zur zweiten Richtung unterbunden ist.

10. Magnetisch-induktives Durchflussmessgerät nach einem der vorhergehenden Ansprüche, **dadurch gekennzeichnet,**
**dass** zwischen Spulenkern (3) und Messrohr (6) mindestens ein Polschuhblech (16) angeordnet ist.

11. Magnetisch-induktives Durchflussmessgerät nach Anspruch 10,
**dadurch gekennzeichnet,**
**dass** jedes Polschuhblech (16) separat in ein dafür vorgesehenes Formnest (17, 18) im Spulenkörper (2) im montierten Zustand des Spulenkörpers (2) eingeklickt ist.

12. Magnetisch-induktives Durchflussmessgerät nach einem der vorhergehenden Ansprüche,
**dadurch gekennzeichnet,**
**dass** die erste Spulenbaugruppe (1) und eine zweite Spulenbaugruppe gegenüberliegend am Messrohr (6) angeordnet sind, wobei die Spulen (4) so angeschlossen werden, dass das von ihnen erzeugte Magnetfeld in eine gemeinsame Richtung weist.

13. Magnetisch-induktives Durchflussmessgerät nach Anspruch 12,
**dadurch gekennzeichnet,**
**dass** die erste Spulenbaugruppe (1) und die zweite Spulenbaugruppe formschlüssig unter einer Vorspannung koaxial zur Längsachse des Spulenkerns (3) miteinander verbunden sind.

14. Magnetisch-induktives Durchflussmessgerät nach einem der Ansprüche 12 oder 13, **dadurch gekennzeichnet,**
**dass** die erste Spulenbaugruppe (1) und die zweite Spulenbaugruppe (1) im Wesentlichen komplementär aufgebaut sind.

15. Magnetisch-induktives Durchflussmessgerät nach einem der vorhergehenden Ansprüche, **dadurch gekennzeichnet,**
**dass** der Spulenkörper (2) zumindest eine Kabelführung (19) zur Führung eines Kabelsstrangs (15a, 15b) aufweist, so dass das geführte Kabel (15) einer vorgegebenen Länge einen vorgegebenen Abstand zum Spulenkörper (2) nicht überschreitet.

## Claims

1. Electromagnetic flowmeter designed to determine the flow of a medium flowing through a measuring tube (6) with a measuring tube axis (A), with at least a first coil assembly (1) with a coil body (2) designed to hold a coil core (3) of a coil (4), wherein the coil (4) is wound on the coil body (2) and wherein the coil core (3) is arranged in a first opening (5) of the coil body (2) with a longitudinal axis of the coil core (3) coaxial to the coil (4), wherein at least two cable harnesses (15a, 15b) are arranged between the coil core (3) and the coil body (2), wherein the cable harnesses (15a, 15b) serve to measure the signals on two or more measuring electrodes arranged on the measuring tube (6), wherein the cable harnesses (15a, 15b) extend inside the coil assembly (1) along a cross-section (40), wherein said cross-section (40) is perpendicular to the measuring tube axis (A),
**characterized in that**
the coil core (3) has at least two recesses (30), wherein each of said recesses (30) is provided to guide one of the cable harnesses (15a, 15b).

2. Electromagnetic flowmeter as claimed in Claim 1,
**characterized in that** the recesses (11) and the coil core (3) are arranged in relation to the coil body (2) in such a way that the cable run of the two cable harnesses (15a, 15b) is symmetrical at least in the area of the coil assembly (1).

3. Electromagnetic flowmeter as claimed in one of the previous claims,
**characterized in that**
in some areas the cable harnesses (15a, 15b) are run parallel to a longitudinal axis B of coil core (3) in the coil assembly (1).

4. Electromagnetic flowmeter as claimed in one of the previous claims,
**characterized in that**
the coil core (3) is a single component made from interconnected laminations (13), wherein the recess (30) is delimited by two laminations.

5. Electromagnetic flowmeter as claimed in one of the previous claims,
**characterized in that**
one of the two cable harnesses (15a, 15b) is run in such a way that it essentially has two bends of more than 30°, particularly of more than 60°, and a third bend of more than 15°, particularly of more than 30°, in the cross-section (40).

6. Electromagnetic flowmeter as claimed in one of the previous claims,
**characterized in that**
the coil body (2) has a form (7), and wherein the coil body (2) has a first end stop (8), which is arranged between the measuring tube (6) and the coil (4), wherein, when the first core assembly (1) is mounted, the form (7) of the coil core (3) rests against the first end stop (8) of the coil body (2) and prevents a movement of the coil core (3) in relation to the coil body (2) along the longitudinal axis of the coil core (3) in a first direction facing away from the measuring tube (6), wherein the coil body (2) has a second end stop (9) on a side of the coil body (2) facing away from the measuring tube (6), wherein the coil core (3) is secured with a fastening element (12) which, when mounted, rests on the second end stop (9) of the coil body (2) and is fixed on the coil body (2) under a pretension along the longitudinal axis of the coil body (3) between the first end stop (8) and the second end stop (9) of the coil body (2).

7. Electromagnetic flowmeter as claimed in one of the previous claims,
**characterized in that**
the coil core (3) is formed as a pole piece.

8. Electromagnetic flowmeter as claimed in one of the previous claims,
**characterized in that**
the coil core (3) has a groove (14) and **in that** the fastening element (12) has at least a tongue (13) adapted to the groove (14) of the coil core (3), wherein the coil core (3) and the fastening element (12) are interconnected via a positive locking connection between the groove (14) and the tongue (13).

9. Electromagnetic flowmeter as claimed in one of the previous claims,
**characterized in that**
the coil body (2) has at least a third end stop (10), wherein, when mounted, the fastening element (12) rests on the third end stop (10), thereby preventing a movement of the fastening element (12) in a second direction perpendicular to the first direction, and preventing a movement of the fastening element (12) in a third direction, perpendicular to the first and the second direction.

10. Electromagnetic flowmeter as claimed in one of the previous claims,
**characterized in that**
at least one pole piece plate (16) is arranged between the coil core (3) and the measuring tube (6).

11. Electromagnetic flowmeter as claimed in Claim 10,
**characterized in that**
each pole piece plate (16) is separately clicked into a cavity (17, 18) provided for this purpose in the coil body (2) when the coil body (2) is mounted.

12. Electromagnetic flowmeter as claimed in one of the previous claims,
**characterized in that**
the first coil assembly (1) and a second coil assembly are arranged opposite one another on the measuring tube (6), wherein the coils (4) are connected in such a way that the magnetic field they generate points in a common direction.

13. Electromagnetic flowmeter as claimed in Claim 12,
**characterized in that**
the first coil assembly (1) and the second coil assembly are interconnected with a positive fit with a pretension in a manner that is coaxial to the longitudinal axis of the coil core (3).

14. Electromagnetic flowmeter as claimed in one of the Claims 12 or 13,
**characterized in that**
the first coil assembly (1) and the second coil assembly (1) have an essentially complementary design.

15. Electromagnetic flowmeter as claimed in one of the previous claims,
**characterized in that**
the coil body (2) has at least a cable guide (19) designed to guide a cable harness (15a, 15b) in such a way that the guided cable (15) of a predefined length does not exceed a predefined distance to the coil body (2).

## Revendications

1. Débitmètre électromagnétique destiné à la détermination du débit d'un produit s'écoulant à travers un tube de mesure (6) avec un axe de tube de mesure (A), avec au moins un premier ensemble bobine (1) avec un corps de bobine (2) destiné à recevoir un noyau de bobine (3) d'une bobine (4), la bobine (4) étant enroulée sur le corps de bobine (2) et le noyau de bobine (3) étant disposé dans une première ouverture (5) du corps de bobine (2) avec un axe longitudinal du noyau de bobine (3) coaxial à la bobine (4), au moins deux faisceaux de câbles (15a, 15b) étant disposés entre le noyau de bobine (3) et le corps de bobine (2), les faisceaux de câbles (15a, 15b) servant à prélever des signaux sur deux ou plusieurs électrodes de mesure disposées sur le tube de mesure (6), les faisceaux de câbles (15a, 15b) s'étendant à l'intérieur de l'ensemble bobine (1) le long d'un plan de coupe (40), lequel plan de coupe (40) est perpendiculaire à l'axe du tube de mesure (A),
**caractérisé**
**en ce que** le noyau de bobine (3) présente au moins deux évidements (30), chacun de ces évidements (30) étant prévu pour guider l'un des faisceaux de câbles (15a, 15b).

2. Débitmètre électromagnétique selon la revendication 1,
**caractérisé en ce que** les évidements (11) et le noyau de bobine (3) sont disposés en face du corps de bobine (2) de telle manière que la pose des deux faisceaux de câbles (15a, 15b) s'effectue de façon symétrique au moins dans la zone de l'ensemble bobine (1).

3. Débitmètre électromagnétique selon l'une des revendications précédentes,
**caractérisé**
**en ce que** les faisceaux de câbles (15a, 15b) sont guidés dans l'ensemble bobine (1) dans des zones parallèles à un axe longitudinal B du noyau de bobine (3).

4. Débitmètre électromagnétique selon l'une des revendications précédentes,
**caractérisé**
**en ce que** le noyau de bobine (3) est un composant unique constitué de tôles de noyau (13) reliées entre elles, l'évidement (30) étant délimité par deux tôles de noyau.

5. Débitmètre électromagnétique selon l'une des revendications précédentes,
**caractérisé**
**en ce que** l'un des deux faisceaux de câbles (15a, 15b) est guidé de telle sorte qu'il présente pour l'essentiel deux coudes de plus de 30°, notamment de plus de 60°, et un troisième coude de plus de 15°, notamment de plus de 30°, dans le plan de coupe (40).

6. Débitmètre électromagnétique selon l'une des revendications précédentes,
**caractérisé**
**en ce que** le corps de bobine (2) présente un profil (7), le corps de bobine (2) présentant une première butée (8), laquelle est disposée entre le tube de mesure (6) et la bobine (4), le profil (7) du noyau de bobine (3), dans l'état monté du premier ensemble bobine (1), s'appuyant contre la première butée (8) du corps de bobine (2) et empêchant un déplacement du noyau de bobine (3) par rapport au corps de bobine (2) le long de l'axe longitudinal du noyau de bobine (3) dans une première direction opposée au tube de mesure (6), le corps de bobine (2) présentant une deuxième butée (9) sur un côté du corps de bobine (2) opposé au tube de mesure (6), le corps de bobine (3) étant pourvu d'un élément de fixation (12) qui, à l'état monté, s'appuie contre la deuxième butée (9) du corps de bobine (2) et est fixé au corps de bobine (2) sous une précontrainte le long de l'axe longitudinal du corps de bobine (3) entre la première butée (8) et la deuxième butée (9) du corps de bobine (2).

7. Débitmètre électromagnétique selon l'une des revendications précédentes,
**caractérisé**
**en ce que** le noyau de bobine (3) est réalisé sous la forme d'une pièce polaire.

8. Débitmètre électromagnétique selon l'une des revendications précédentes,
**caractérisé**
**en ce que** le noyau de bobine (3) présente une rainure (14) et **en ce que** l'élément de fixation (12) présente au moins une bonde (13) adaptée à la rainure (14) du noyau de bobine (3), le noyau de bobine (3) et l'élément de fixation (12) étant reliés entre eux par un ajustement de forme entre la rainure (14) et la bonde (13).

9. Débitmètre électromagnétique selon l'une des revendications précédentes,
**caractérisé**
**en ce que** le corps de bobine (2) présente au moins une troisième butée (10), l'élément de fixation (12) s'appuyant, à l'état monté, contre la troisième butée (10), ce qui empêche un déplacement de l'élément de fixation (12) dans une deuxième direction, perpendiculaire à la première direction, et ce qui empêche un déplacement de l'élément de fixation (12) dans une troisième direction, perpendiculaire à la première et à la deuxième direction.

10. Débitmètre électromagnétique selon l'une des revendications précédentes,
**caractérisé**
**en ce qu'**au moins une pièce polaire (16) est disposée entre le noyau de bobine (3) et le tube de mesure (6).

11. Débitmètre électromagnétique selon la revendication 10,
**caractérisé**
**en ce que** chaque pièce polaire (16) est encliquetée séparément dans une cavité (17, 18) prévue à cet effet dans le corps de bobine (2) à l'état monté du corps de bobine (2).

12. Débitmètre électromagnétique selon l'une des revendications précédentes,
**caractérisé**
**en ce que** le premier ensemble bobine (1) et un deuxième ensemble bobine sont disposés l'un en face de l'autre sur le tube de mesure (6), les bobines (4) étant connectées de telle sorte que le champ magnétique généré par celles-ci pointe dans une direction commune.

13. Débitmètre électromagnétique selon la revendication 12,
**caractérisé**
**en ce que** le premier ensemble bobine (1) et le deuxième ensemble bobine sont reliés l'un à l'autre par un ajustement de forme sous une précontrainte, de façon coaxiale à l'axe longitudinal du noyau de bobine (3).

14. Débitmètre électromagnétique selon l'une des revendications 12 ou 13,
**caractérisé**
**en ce que** le premier ensemble bobine (1) et le deuxième ensemble bobine (1) sont de construction pour l'essentiel complémentaire.

15. Débitmètre électromagnétique selon l'une des revendications précédentes,
**caractérisé**
**en ce que** le corps de bobine (2) présente un guide-câble (19) destiné au guidage d'un faisceau de câbles (15a, 15b), de telle sorte que le câble (15) guidé, présentant une longueur prédéfinie, ne dépasse pas une distance prédéfinie par rapport au corps de bobine (2).
